Europäisches Patentamt

European Patent Office

Office européen des brevets

(19)

(11) Veröffentlichungsnummer: **0 236 695**
**B1**

(12) # EUROPÄISCHE PATENTSCHRIFT

(45) Veröffentlichungstag der Patentschrift:
**11.04.90**

(51) Int. Cl.⁴: **B60K 17/35**

(21) Anmeldenummer: **87100666.4**

(22) Anmeldetag: **20.01.87**

(54) **Allradantrieb für ein Kraftfahrzeug.**

(30) Priorität: **06.03.86 DE 3607373**

(43) Veröffentlichungstag der Anmeldung:
**16.09.87 Patentblatt 87/38**

(45) Bekanntmachung des Hinweises auf die Patenterteilung:
**11.04.90 Patentblatt 90/15**

(84) Benannte Vertragsstaaten:
**DE FR GB IT NL SE**

(56) Entgegenhaltungen:
**EP-A- 0 030 120**
**DE-A- 3 317 247**
**DE-C- 3 507 490**

(73) Patentinhaber: **Dr.Ing.h.c. F. Porsche Aktiengesellschaft, Porschestrasse 42, D-7000 Stuttgart 40(DE)**

(72) Erfinder: **Müller, Robert, Badstrasse 21, D-7251 Mönsheim(DE)**

**Beschreibung**

Die Erfindung betrifft einen Allradantrieb nach dem Oberbegriff des Anspruchs 1.

Ein derartiger Allradantrieb ist aus DE-A 3 317 247 bekannt. Mit einem an der Vorderachse des Kraftfahrzeugs angeordneten Gangschaltgetriebe werden die beiden über ein Differential miteinander gekoppelten Räder der Vorderachse dauernd angetrieben. Das vom Gangschaltgetriebe angetriebene Differentialgehäuse treibt über einen Kegelrad-Winkeltrieb eine Längswelle an, in die eine Viskosekupplung eingesetzt ist. Die Ausgangswelle der Viskosekupplung treibt über einen Kegelrad-Winkeltrieb die Hinterachse an, sobald eine Drehzahldifferenz zwischen Vorderachse und Hinterachse vorhanden ist.

Dieses schlupfabhängig selbsttätig zuschaltbare Sperrsystem hat den Nachteil, daß je nach den für das Fahrzeug verwendeten Motoren und Gangschaltgetrieben unterschiedliche, auf die Fahrdynamik der Kraftfahrzeuge abgestimmte Viskosekupplungen eingesetzt werden müssen.

Es ist die Aufgabe der Erfindung, für einen gattungsgemäßen Antriebsstrang eines Kraftfahrzeugs ein Allrad-Sperrsystem zu konzipieren, das ohne nennenswerte Abänderungen für unterschiedliche Typen von Kraftfahrzeugen einsetzbar ist. Außerdem soll der Allradantrieb so in die Achsgehäuse der Vorderachse und Hinterachse integriert werden, daß der Allrad-Antriebsblock eine kompakte raumsparende Form erhält.

Zur Lösung dieser Aufgabe dienen die kennzeichnenden Merkmale des Anspruchs 1. Das verwendete Sperrsystem umfaßt ein Planetengetriebe mit geringfügig von 1:1 abweichender Durchtriebsübersetzung von der Eingangswelle zur Ausgangswelle. Da am Planetengetriebe eine Bremsvorrichtung mit großer Übersetzung angreift, ist es möglich, durch geringfügige Abänderungen der Bremsvorrichtungen dasselbe Sperrsystem für unterschiedliche Fahrzeugtypen brauchbar zu machen. Bei Verwendung einer Fliehkraftbremse muß zur Anpassung lediglich die Masse der Bremsbacken abgeändert werden. Wird eine Bremsvorrichtung mit externer Ansteuerung verwendet, so läßt sich ohne konstruktive Änderungen deren Bremsverhalten den jeweiligen fahrdynamischen Erfordernissen anpassen.

Ein Ausführungsbeispiel der Erfindung ist in der Zeichnung dargestellt und wird nachfolgend erläutert.

Es zeigt

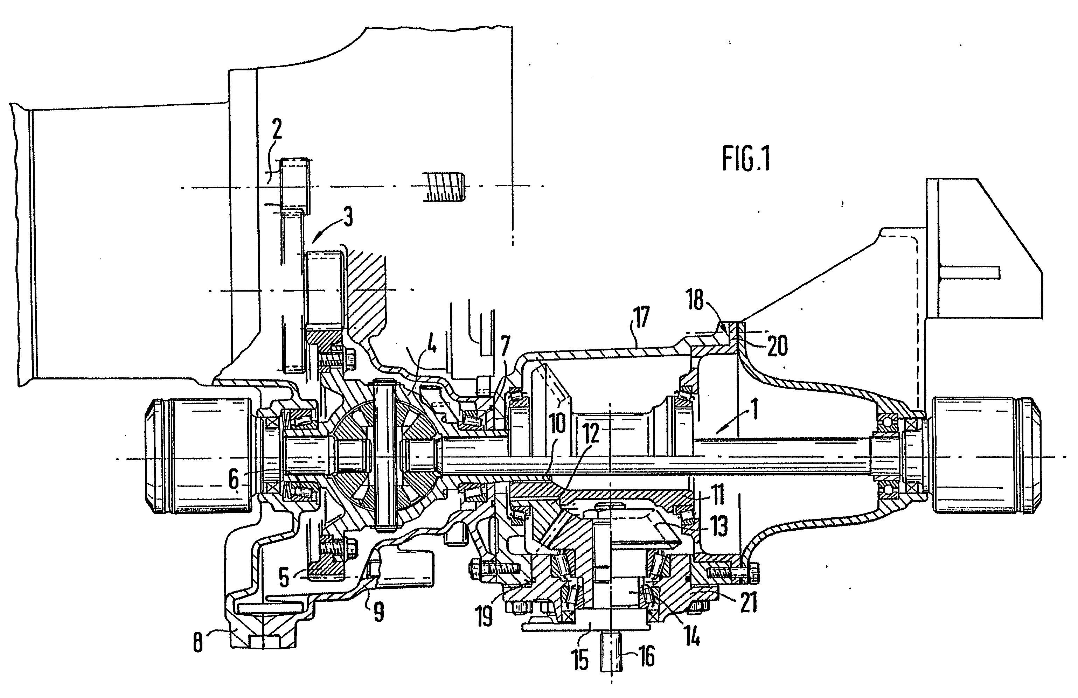

Fig. 1 Allrad-Antrieb zur Vorderachse, mit Winkeltrieb zu der die Hinterachse antreibenden Längswelle,

Fig. 2 Allrad-Antrieb zur Hinterachse mit Sperrsystem,

Fig. 3 Querschnitt durch die Fliehkraftbremse des Sperrsystems.

Ein im Bereich der Vorderachse 1 an einem Kraftfahrzeug angeordnetes Gangschaltgetriebe 2 treibt über ein Vorgelege 3 ein an einem Differentialgehäuse 4 befestigtes Stirnzahnrad 5 an. Das Differentialgehäuse 4 ist in zwei Lagern 6 und 7 in einem an das Gangschaltgetriebe 8 angeflanschten Achsgehäuse 9 gelagert. Ein durch das Lager 7 hindurchgeführter Fortsatz 10 des Differentialgehäuses 4 ist durch eine Kerbzahnverbindung in einer Lagerhülse 11 befestigt, auf der außen mit einer Kerbzahnverbindung ein Kegelrad 12 drehfest ist. Das Kegelrad 12 bildet einen 90°-Winkeltrieb mit einem zweiten Kegelrad 13, in dessen Zapfen 14 ein Kupplungsflansch 15 einer in Längsrichtung des Fahrzeugs weisenden Längswelle 16, die überlicherweise als Kardanwelle ausgeführt ist, befestigt ist.

Der Winkeltrieb 12, 13 ist in einem Gehäuse 17 untergebracht und in ihm gelagert. Hierzu sind an dem Gehäuse 17 zwei zueinander senkrecht stehende Trennflächen 18 und 19 angedreht. An der einen, zur Vorderachse 1 senkrechten Trennfläche 18 ist eine Lagerplatte 20 angeflanscht, in der die das Kegelrad 12 tragende Lagerhülse 11 an ihrer einen Seite gelagert ist. An der anderen Seite ist die Lagerhülse 11 zusammen mit dem Kegelrad 12 unmittelbar im Boden des Gehäuses 17 gelagert. An der anderen Trennfläche 19 des Gehäuses 11 ist ein Lagerflansch 21 für das Kegelrad 13 zentriert befestigt.

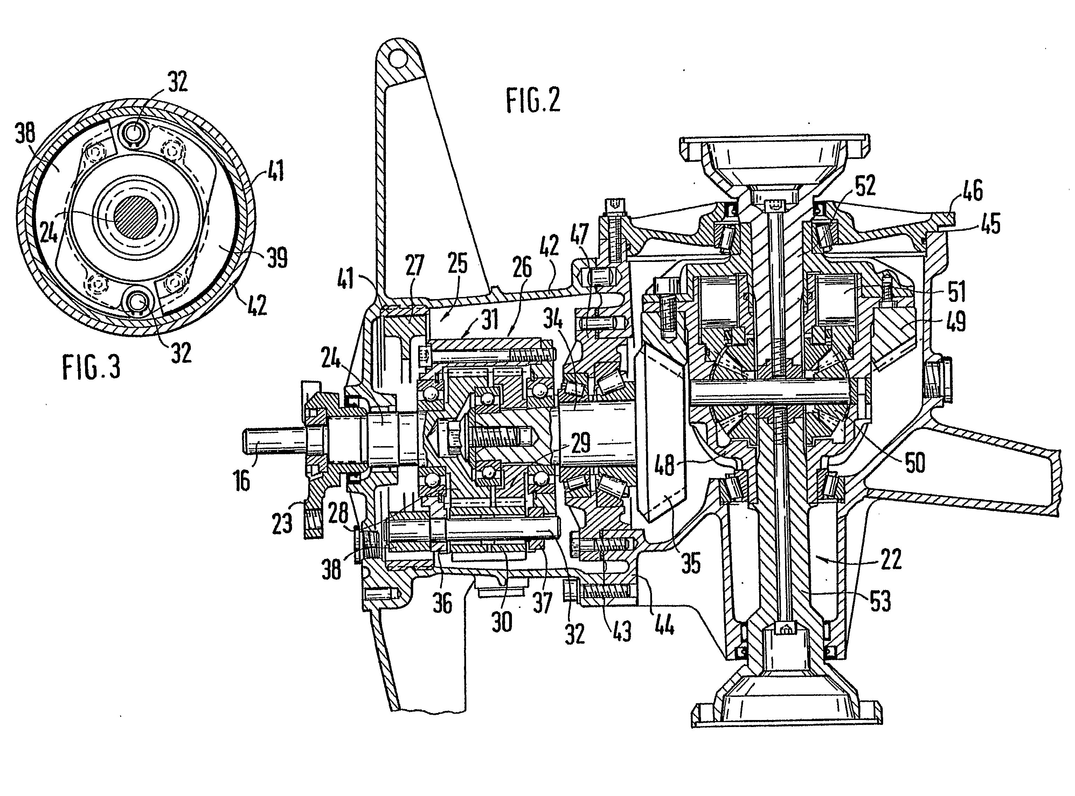

Der hintere Teil des Allradantriebs, der zum Antrieb der Hinterachse 22 dient, ist in Fig. 2 dargestellt. Die Längswelle 16 ist über einen Kupplungsflansch 23 mit der Eingangswelle 24 zu einem Sperrsystem 25 verbunden, das aus einem Planetengetriebe 26 und einer Fliehkraftbremse 27 zusammenwirkt. Die Eingangswelle 24 ist einstückig mit einem Eingangssonnenrad 28 ausgebildet, mit dem koaxial ein Ausgangssonnenrad 29 gelagert ist, das durch eine Kerbzahnverbindung auf dem Zapfen eines Kegelrads 35 drehfest ist.

Mit dem Eingangssonnenrad 28 und dem Ausgangssonnenrad 29 stehen Planetenräder 30 in Eingriff, die symmetrisch am Umfang eines Planetenträgers 31 verteilt angeordnet und auf dessen Lagerbolzen 32 gelagert sind. Als Planetenträger 31 dient beiderseits der Sonnenräder 28 bzw. 29 auf der Eingangswelle 24 bzw. dem Zapfen 34 des Kegelrads 35 gelagerte Platten 36, 37. Auf dem vorderen Ende der Lagerbolzen 32 sind diametral gegenüberliegend zwei mit Bremsbelägen versehene Bremsbacken 38, 39 schwenkbar gelagert und durch Schweißringe axial gesichert. Die mit den Planetenrädern 30 rotierenden Bremsbacken 38, 39 werden durch Fliehkraft an einen Bremsring 41 angedrückt, der in einem Sperrengehäuse 42 befestigt ist.

Das Sperrengehäuse 42 ist an einer Anschlußebene 43 an ein Hinterachsgehäuse 44 angeflanscht, an das in einer dazu senkrechten Anschlußebene 45 eine Hinterachslagerplatte 46 angeflanscht ist. In der Anschlußebene 43 ist eine Lagerplatte 47 für das Kegelrad 35 im Hinterachsgehäuse 44 zentriert und befestigt. Das Kegelrad 35 bildet mit einem am Differentialgehäuse 48 angeschraubten Tellerrad 49 einen hinteren Winkeltrieb. In dem Differentialgehäuse 48 ist neben dem Kegelrad-Differentialgetriebe 50 eine Lamellensperre 51 untergebracht, um eine Quersperre der beiden zu den Hinterrädern führenden Achswellen 52 und 53 realisieren zu können.

Die Übersetzung des vorderen Winkeltriebs 12, 13 beträgt 23:32, die Durchtriebsübersetzung am Planetengetriebe 26 beträgt 44:46; für die Übersetzung am hinteren Winkeltrieb 35, 49 ist ein Verhältnis von 33:22 gewählt. Das Produkt der drei Übersetzungen wird somit 1:1, so daß die Hinterachse 22 auf Synchronlauf mit der Vorderachse 1 ausgelegt ist. Tritt bedingt durch die Straßenverhältnisse eine Drehzahldifferenz zwischen Vorderachse 1 und Hinterachse 22 auf, so wird der Planetenträger mit dem 22fachen dieser Drehzahldifferenz in Umdrehung versetzt und erzeugt an der Fliehkraftbremse 27 ein progressiv, beispielsweise quadratisch ansteigendes Bremsmoment, das als Allrad-Antriebsmoment zur Verfügung steht.

## Patentansprüche

1. Allradantrieb für ein Kraftfahrzeug, mit einer vom Fahrzeugmotor bzw. Gangschaltgetriebe dauernd antreibbaren ersten Achse und einer mit dem Gangschaltgetriebe über ein Sperrsystem in Antriebsverbindung bringbaren zweiten Achse, wobei beide Räder der ersten Achse und der zweiten Achse über Differentialgetriebe miteinander gekoppelt sind und wobei das vom Gangschaltgetriebe angetriebene Differentialgehäuse der ersten Achse über einen Kegelrad-Winkeltrieb eine Längswelle antreibt, die das am Achsgehäuse der zweiten Achse angeordnete Sperrsystem antreibt, dessen Ausgangswelle über einen Kegelrad-Winkeltrieb das Differentialgehäuse der zweiten Achse antreibt, dadurch gekennzeichnet, daß das Sperrsystem (25) aus einem aus zwei Sonnenrädern (28, 29), Planetenrädern (30) und einem Planetenträger (31) zusammengesetzten Planetengetriebe (26) mit einer geringfügig von 1:1 abweichenden Durchtriebsübersetzung sowie einer am Planetengetriebe (26) mit großer Übersetzung angreifenden Bremsvorrichtung (Fliehkraftbremse 27) besteht.

2. Allradantrieb nach Anspruch 1, dadurch gekennzeichnet, daß der vordere Winkeltrieb (12, 13) von einem Gehäuse (17) umschlossen ist, das eine zur Vorderachse (1) senkrechte Trennfläche (18) aufweist, an die eine Lagerplatte (20) für eine das Kegelrad (12) tragende Lagerhülse (11) angeflanscht ist und eine weitere, zur Längswelle (16) senkrechte Trennfläche (19) aufweist, an der ein Lagerflansch (21) für das andere Kegelrad (13) zentriert und befestigt ist.

3. Allradantrieb nach Anspruch 2, dadurch gekennzeichnet, daß in der Lagerplatte (20) eine Lagerhülse (11) gelagert ist, die auf einem in das Gehäuse (17) hineinragenden Fortsatz (10) des Differentialgehäuses (4) zentriert und befestigt ist und auf der außen das Kegelrad (12) drehfest zentriert ist, das im Boden des Gehäuses (17) gelagert ist.

4. Allradantrieb nach Anspruch 1, dadurch gekennzeichnet, daß der aus einem Kegelrad (35) und einem Tellerrad (49) bestehende hintere Winkeltrieb von einem Hinterachsgehäuse (44) umschlossen ist, das zwei zueinander senkrechte Anschlußebenen (43, 45) aufweist, wobei an der einen Anschlußebene (45) eine Lagerplatte (47) für das mit dem Tellerrad (49) umlaufende Differentialgehäuse (48), an der anderen Anschlußebene (43) ein das Sperrsystem (25) umschließendes Sperrengehäuse (42) angeflanscht ist.

5. Allradantrieb nach Anspruch 5, dadurch gekennzeichnet, daß das Planetengetriebe (26) aus einem Eingangssonnenrad (28), einem koaxial daneben gelagerten und mit der zuzuschaltenden Achse (Hinterachse 22) verbundenen Ausgangssonnenrad (29) sowie aus den mit beiden Sonnenrädern (28, 29) in Eingriff stehenden, am Planetenträger (31) gelagerten Planetenrädern (30) gebildet ist, wobei die Übersetzung vom Eingangssonnenrad (28) zum Planetenträger (31), an dem ein Bremsglied der Fliehkraftbremse (27) unmittelbar angreift etwa 15:1 bis 30:1 beträgt.

6. Allradantrieb nach Anspruch 5, dadurch gekennzeichnet, daß als Bremsvorrichtung eine Fliehkraftbremse (27), eine hydrodynamische Bremse, eine elektrische Wirbelstrombremse oder eine von außerhalb gesteuerte Scheiben- bzw. Lamellenbremse verwendet ist.

## Claims

1. An all-wheel drive for a motor vehicle, having a first shaft continuously driven by the vehicle engine or the gearshift mechanism and a second shaft which can be brought into driving engagement with the gearshift mechanism by way of a locking system, the two gearwheels of the first shaft and of the second shaft being connected to each other by way of differential gears, and the differential housing of the first shaft driven by the gearshift mechanism driving by way of a bevel-gear angle drive a longitudinal shaft driving the locking system which is mounted on the housing of the second shaft, the output shaft of the locking system driving the differential housing of the second shaft by way of a bevel-gear angle drive, characterized in that the locking system (25) comprises a planetary gearing (26) formed by two sun gears (28, 29), planetary gears (30) and a planetary gear carrier (31) and having a through-drive transmission ratio diverging slightly from 1:1, and a braking device (centrifugal brake 27) engaging on the planetary gearing (26) with a higher transmission ratio.

2. An all-wheel drive according to claim 1, characterized in that the front angle drive (12, 13) is surrounded by a housing (17) comprising a separation surface (18) at right angles to the front shaft (1) and on which a bearing plate (20) for a bearing sleeve (11) carrying the bevel gear (12) is flange-mounted and comprises a further separation surface (19) at right angles to the longitudinal shaft (16) and on which a bearing flange (21) for the other bevel wheel (13) is centred and secured.

3. An all-wheel drive according to claim 2, characterized in that a bearing sleeve (11) is mounted in the bearing plate (20), the bearing sleeve (11) being centred and secured on an extension (10) of the differential housing (4) projecting into the housing (17) and on the outside of which the bevel gear (12) mounted in the base of the housing (17) is centred so as to be rotationally rigid.

4. An all-wheel drive according to claim 1, characterized in that the rear angle drive comprising a bevel gear (35) and a crown gear (49) is surrounded by a rear-axle housing (44) comprising two attachment planes (43, 45) at right angles to each other, a bearing plate (47) for the differential housing (48) surrouding the crown wheel (49) being flange-mounted on one attachment plane (45), and a locking housing (42) surrounding the locking system (25) being flange-mounted on the other attachment plane (43).

5. An all-wheel drive according to claim 5 [sic], characterized in that the planetary gearing (26) is formed by an input sun gear (28), an output sun gear (29) mounted coaxially beside it and being connected to the shaft to be engaged (rear axle 22), and planetary gears (30) engaging with the two sun gears (28, 29) and mounted on the planetary gear carrier (31), the transmission from the input sun gear (28) to the planetary gear carrier (31), with which a braking member of the centrifugal brake (27) directly engages, amounting to approximately between 15:1 and 30:1.

6. An all-wheel drive according to claim 5, characterized in that a centrifugal brake (27), a hydrodynamic brake, electrical eddy-current brake or a disc brake or multiple-disc brake controlled from outside is used as the braking device.

## Revendications

1. Transmission intégrale pour un véhicule à moteur, comportant un premier essieu pouvant être entraîné en continu par le moteur du véhicule, ou le mécanisme de changement de vitesses, et un second essieu pouvant être amené en liaison d'entraînement avec le mécanisme de changement de vitesses par l'intermédiaire d'un système de blocage, transmission dans lequelles les deux roues du premier essieu et celles du deuxième essieu sont couplées ensemble par l'intermédiaire d'un mécanisme différentiel, et le carter de différentiel du premier essieu entraîné par le mécanisme de changement de vitesses entraîné, par l'intermédiaire d'un engrenage d'angle à pignons coniques un arbre longitudinal qui entraîne le système de blocage disposé sur le carter du second essieu, système dont l'arbre de sortie entraîne par l'intermédiaire d'un engrenage d'angle à pignons coniques le carter de différentiel du second essieu, caractérisée en ce que le système de blocage (25) est constitué par un engrenage planétaire (26) constitué de deux roues solaires (28, 29), de roues satellites (30) et d'une cage porte-satellites (26), ayant un rapport de transmission s'écartant très peu de 1:1, ainsi que d'un système de freinage (frein centrifuge 27) agissant avec une grande multiplication sur l'engrenage planétaire (26).

2. Transmission intégrale selon la revendication 1, caractérisée en ce que l'engrenage d'angle avant (12, 13) est entouré par un carter (17) qui comporte une surface de séparation (18) perpendiculaire à l'essieu avant (1), sur laquelle est bridée une plaque palier (20) pour un manchon de palier (11) portant le pignon conique (12), et qui comporte une autre surface de séparation (19) perpendiculaire à l'arbre longitudinal (16) sur laquelle est centrée et fixée une bride de positionnement (21) pour l'autre pignon conique (13).

3. Transmission intégrale selon la revendication 2, caractérisée en ce qu'on monte dans la plaque palier (20) un manchon de palier (11) qui est centré et fixé sur un prolongement du carter de différentiel (4) saillant dans le carter (17), manchon sur lequel est centré à l'extérieur, en en étant solidaire, le pignon conique (12), qui est monté dans le fond du carter (17).

4. Transmission intégrale selon la revendication 1, caractérisée en ce que l'engrenage d'angle arrière d'un pignon conique (35) et d'une couronne de différentiel (49) est entouré par un carter d'essieu arrière (44), qui comporte deux plans de raccordement (43, 45) perpendiculaires entre eux, une plaque palier (47) pour le carter de différentiel (48) tournant avec la couronne de différentiel (49) étant bridée sur l'un des plans de raccordement (45), et un carter de blocage (42) entourant le système de blocage (25) étant bridé sur l'autre plan de raccordement (43).

5. Transmission intégrale selon la revendication 1, caractérisée en ce que l'engrenage planétaire (26) est formé par une roue solaire d'entrée (28), une roue solaire de sortie (29) montée coxialement à côté de la précédente et reliée à l'essieu (essieu arrière 22) à mettre en marche ainsi que par les roues satellites (30) en prise avec les deux roues solaires (28, 29) et montées sur la cage porte-satellites (31), le rapport de transmission entre la roue solaire d'entrée (28) et la cage porte-satellites (31) sur laquelle agit directement un élément de freinage du frein centrifuge (27), est d'environ 15:1 à 30:1.

6. Transmission intégrale selon la revendication 5, caractérisée en ce qu'on utilise comme dispositif de freinage un frein centrifuge (27), un frein hydrodynamique, un frein électrique à courants de Foucault ou un frein à disque ou un frein à disque multiples commandé de l'extérieur.

FIG.1

EP 0 236 695 B1

FIG.2

FIG.3